# EUROPEAN PATENT APPLICATION

(11) **EP 3 179 001 A1**
(43) Date of publication of application: **14.06.2017**
(21) Application number: 16202813.8
(22) Date of filing: 08.12.2016
(51) Int. Cl.: E03F 7/10, B01D 33/11, C02F 11/12

(54) **METHOD AND DEVICE FOR DEWATERING SEPTIC SLUDGE**

(30) Priority: 09.12.2015 NO 20151693
(71) Applicant: Botnetank AS, 3095 Eidsfoss (NO)
(72) Inventor: Kolstad, Morten, 3178 Vaale (NO)
(74) Representative: Curo AS

(57) **Abstract**

Method and device for emptying a septic tank (12). Sludge is pumped from septic tank (12) by a vacuum pump (10) to a vacuum tank (11). Then, sludge is pumped from vacuum tank (11) by pump (13) and mixed with flocculation agent from tank (14) and supplied to a maturation tank (50) provided with sieve means (55) for an initial dewatering. Then, the mixture of sludge and flocculation agent is guided to a rotary drum (20) with a perforated surface (20a) and an internal screw feeder (23). The underside of the drum (20) is flushed periodically with water from nozzles (25). Sludge is ejected through a conical end (22, 27) and further to a dry solids tank (31) provided with a sieve plate (33) and strainer chamber (32) and subjected to additional straining. Reject water is returned to tank (12). The device is mounted on a vehicle.

## Description

The present invention relates to a device and method for dewatering sludge, including septic sludge, according to the preamble of claims 1 and 13, respectively.

### Background

Several Norwegian municipals have introduced requirements that dewatering of septic sludge must be performed by local operators because the municipals have no plans to build sewer networks to sewage treatment plants. Accordingly, dewatering must be done in a mobile manner.

A disadvantage of prior art mobile dewatering systems is that they produce dry solids having relatively high water content. Another disadvantage is limited capacity and long dewatering time. Another disadvantage is that reject water with high content of particles is produced. Some known solutions transport the sludge to a stationary plant for dewatering there. Others perform dewatering under their way from one draining location to another, which can result in transfer of different bacterial floras between the draining locations. Dewatering during transport also has the disadvantage that water removed from sludge extracted at one draining location has to be emptied into a container at the next location with a smaller available volume than required.

US Patent No. 5,312,551 describes a mobile unit for treatment of the content in septic tanks. It contains pumping equipment for pumping slurry from the septic tank to a first reservoir where coagulants are added. It describes a centrifuge downstream of the reservoir where water is separated from the sludge. Dry solids collected along the wall of the centrifuge is scraped off and evacuated into a dry solids container, whereas the liquid is returned back to the septic tank. However, a construction like this is expected to have limited capacity, and it is unclear how dry solid material is to be transferred from the centrifuge to the dry solids tank.

NO 309 617 B1 describes a method and a device for removing sludge, and purification of sewage water by using mobile equipment. A rotary drum sieve with internal transport screw is used for separating sludge.

NO 333 606 B1 describes a mobile unit and a method for dewatering water-containing sludge from a sewage water well or similar. The water-containing sludge is collected in a tank where sludge is separated in a downstream filter device, and the purified water is returned back to the well.

GB 2 438 076 A describes a rotary drum-shaped sieve with a internal open screw for forwarding material to be dewatered. The drum grid can be flushed both internally and externally, so that the grid meshes are kept open.

Another example from the prior art is described in GB 2 004 859 A. This publication describes a mobile device for dewatering sludge. The device contains means 1 for flocculation of sludge in water from a septic tank, by means of chemicals, means for removing sludge 7, and means 18 for collecting sludge for transport, and a container 15 for purified water. The process is initiated in that water containing sludge is transported from a septic tank by means of vacuum to a flocculation tank 1. Flocculation agent is added to the water in tank 1 and the water is subjected to flocculation. During the flocculation in tank 1, purified water in container 15 from the former location is transferred to the septic tank being treated. Then, water in tank 1 having flocculated sludge is transferred to a dewatering device 7 where sludge is collected in a container 18, whereupon the water is forwarded to water tank 15. Then the mobile unit leaves the location and moves on to the next location having a septic tank to be treated. Under its way to the next location, the sludge is being further dewatered. A disadvantage of a device like this is that water from one septic tank having one type of bacterial flora is transferred to another septic tank having a different type of bacterial flora, thus potentially disturbing bacterial processes. Another disadvantage of a solution like this is that water is transported between different locations. However, road regulations puts a limitation on weight of vehicle and hence volume of load, which again puts a limitation on number of septic tanks that can be treated during a specific period of time.

### Object

An object of the invention is to provide a method and a device having increased capacity for dewatering sludge, particularly septic sludge. Another object is to produce improved dry solids and cleaner reject water having low particle content. Yet another object of the invention is to reduce the use of polymer additives. Another object of the invention is to reduce spreading of different bacterial floras between different septic tanks.

### The invention

The objects above are achieved by a device according to the characterizing part of patent claim 1, and a method according to the characterizing part of patent claim 13. Additional advantageous features appear from the respective dependent claims.

The invention concerns a device for purifying sludge from containers, in particular sludge from stationary septic tanks, said device being arranged on a vehicle and comprising:
a vacuum tank connected with at least one vacuum pump, a suction duct, arranged to evacuate fluid sludge from a container to the vacuum tank, a return duct to return reject water back to the container,
a flocculation agent container for supply of flocculation agent to the fluid sludge,
at least one sieve device for separating water from the sludge,
a dry solids container for accommodation of partially dewatered sludge, and
means for returning reject water separated from the sludge back to the container.

In accordance with the invention the device further comprises
a maturation tank with an inlet and an outlet, to receive fluid sludge from the vacuum tank and flocculation agent from its container, supplied by means of pump means,
wherein the outlet of the maturation tank is connected to a rotary filter drum having an inlet and an outlet, a perforated surface and a screw arranged within the drum,
flushing means arranged to flush the outside of the drum surface with water;
collecting means for collecting flushing water and return to the septic tank, and
a dry solids tank in flow connection with the outlet of the filter drum, wherein the dry solids tank further exhibits a sieve plate and a drainage chamber arranged under the dry solids tank for further draining water from the sludge.

The maturation tank preferably exhibits a sieve means connected to an outlet, and a return duct for draining water from the mixture of sludge and flocculation agent. This sieve means may comprise a concentric perforated cylinder arranged within a closed cylinder at the outlet end of the maturation tank.

The outlet end of the drum preferably exhibits a cone-shaped transition having a gradually decreasing diameter towards the outlet to create a counter-pressure within the drum.

Moreover, the device further exhibits a water tank arranged to supply flocculation agent to the flocculation agent tank. The flocculation agent tank can be connected to the suction side of the pump arranged to pump sludge from the vacuum tank.

The flushing means at the drum can be realized in the form of a row of nozzles arranged along at least a part of the underside of the drum. Moreover, the rotary drum exhibits a motor to rotate the drum together with the screw.

In one embodiment, the sieve means in the maturation tank exhibits a perforation degree of 15-25%, particularly 19%. In one embodiment, the sieve plate in the dry solids tank exhibits a perforation degree of 15-25%, particularly 23%, whereas the drum surface can exhibit a perforation degree of 50-70%, particularly 56%.

Moreover, the invention provides a method for emptying a container by means of a mobile device described above, wherein sludge is withdrawn from the septic tank to a vacuum container and mixed with flocculation agent from a flocculation agent tank, whereupon the mixture of sludge and flocculation agent is supplied to sieve means for removing water from the sludge.

In accordance to the invention, the mixture of sludge and flocculation agent is led to a maturation tank to initiate flocculation of the sludge, whereupon the mature mixture of sludge and flocculation agent is supplied to a rotary drum and guided along a perforated surface by an internal screw, and flushed at least periodically with water from the outside of the drum. The mixture of sludge and flocculation agent is guided out of the drum and further to a dry solids tank and subjected to additional straining to obtain dry solids with a water content of less than or equal to about 80%, whereby flushing water and water removed from the sludge is returned to the container as reject water with a low particle content.

In a preferred embodiment, the mixture of sludge and flocculation agent is guided through a sieve arranged in the maturation tank, thus effecting an initial straining of water.

Accordingly, in accordance with a preferred embodiment of the invention, straining is performed in three steps, first in the maturation tank, then in the rotary drum and finally in the dry solids tank provided with sieve plate. Water separated in the dry solids tank can be guided directly back to the tank being emptied, optionally via a water drainage chamber arranged in connection to, or as a part of, the dry solids tank.

### Detailed description

In the following, the invention is described in further detail with reference to drawings. In the drawings, identical reference numerals are used for identical or similar components, where
Fig. 1 shows a simplified process flow diagram of the mobile system in accordance with the invention,
Fig. 2 shows a partial cross-section through one embodiment of the mobile system in accordance with the invention with the system components assembled on a truck,
Figs. 3a-d show the drum in different angles,
Figs. 4a and 4b show the maturation tank for sludge and flocculation agent, and
Fig. 5 shows a simplified cross-section through an integral module comprising numerous tanks and the drum sieve.

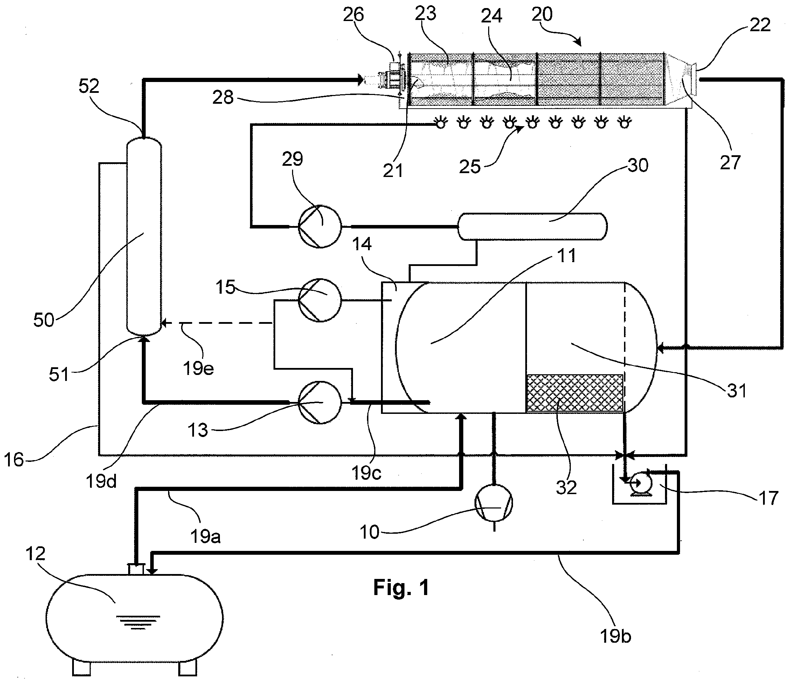

Reference is now made to Fig. 1. The drawing shows a simplified process flow diagram that illustrates the process flow for evacuation of sludge from a septic tank for storage of dry sludge, and pumping of reject water back to the septic tank.

A vacuum pump 10 is connected with a vacuum tank 11 creating underpressure in the vacuum tank, and pumping septic sludge from a septic tank 12 via duct 19a. Septic sludge, for example, typically contains 95% water prior to treatment. When desired volume of septic sludge has been pumped into the vacuum tank 11, the vacuum pump 10 is stopped, whereupon a septic pump 13 pumps the septic sludge from vacuum tank 11 in duct 19c, 19d. A polymer tank 14 for coagulation agent/flocculation agent is connected with a water tank 30. The polymer tank 14 accommodates flocculation agent mixed with water supplied from the water tank 30. A polymer tank 15 evacuates flocculation agent dissolved in water from tank 14 to the suction side of septic pump 13, and mixing septic sludge and flocculation agent dissolved in water in duct 19c. Alternatively, the flocculation agent is directed back to the maturation tank by pump 15 and via duct 19e.

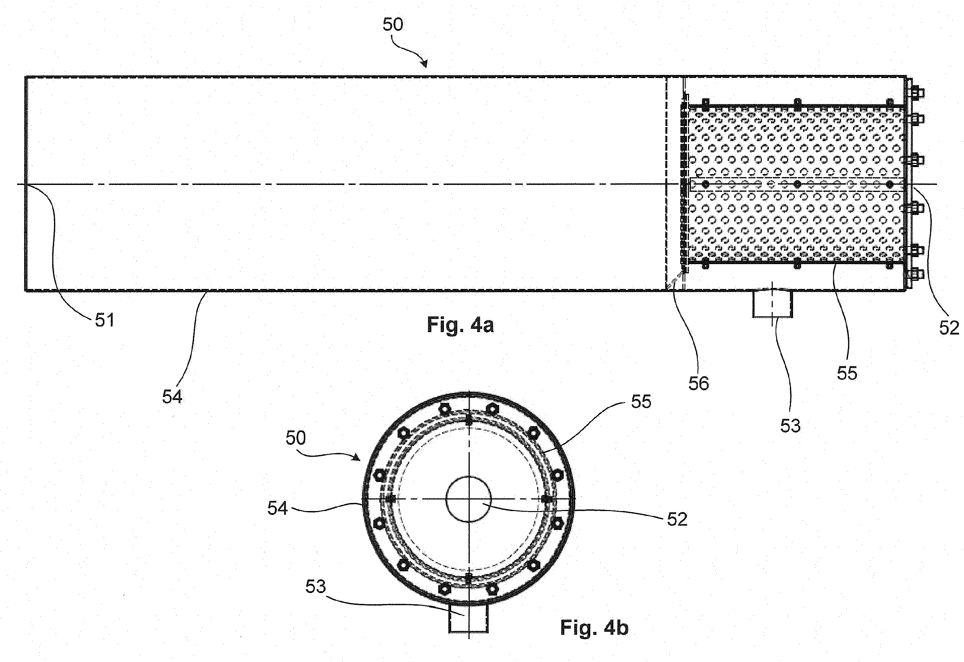

This mixture is further pumped into a mixing tank or maturation tank 50 to let the mixture of septic sludge and flocculation agent maturate and effect for a period of time before the mixture is supplied to the next process step. The retention time vary with, among other things, the composition of the septic sludge and desired capacity, whereas the flow rate within the maturation tank 50 typically amounts to 15-25 m³/min, particularly 18 m³/min, or a retention time of about 1 minute for the latter flow rate. Preferably, some of the water in the sludge is removed already in the mixing tank 50 and returned to septic tank 12 via duct 16. The mixing tank 50 is preferably kept at a slight overpressure, e.g. 0.5 bar, to simplify a first straining of water for return in duct 16. The overpressure can be produced by making the outlet of the mixing tank smaller than the inlet, and/or arranging the outlet at a higher elevation than the inlet to provide a water column. When the mixture of sludge and flocculation agent leave the mixing tank 50, the coagulation process has started and additionally some water has preferably been strained off and returned to septic tank 12. In this way, straining of sludge is more effective. The mixing tank 50 is illustrated in further details in Fig. 4. The mixture leaving the mixing tank 50 typically has a water content of about 90%, dependent on retention time, original water content, an initial straining of water, and other factors.

Then the mixture of sludge and flocculation agent is guided to a sieve device. In this embodiment, the sieve device is an elongate drum 20 with a substantially circular cross-section, and an inlet 21 in one end and an outlet 22 in the opposite end. The mixture of sludge and flocculation agent from the mixing tank 50 is guided into the drum 20 via inlet 21 and fed through the longitudinal direction of the drum by means of a screw 23 arranged on an axle 24 driven to co-rotate with the drum by a motor 26. The surface of the drum 20 is perforated and serves as a sieve or strainer to remove water from the mixture of sludge and flocculation agent. At least a part of the drum 20 underside is flushed with water from a nozzle arrangement indicated by 25 and 29 with water from water tank 30. The purpose of the flushing from below is to prevent sludge from flowing out of the drum 20 through its perforated surface. The screw 23 accommodated in the drum 20 typically co-rotates with a rotational speed of 20-25 opm during treatment of common septic sludge, but this may naturally vary dependent on desired capacity and dry solids content in the sludge to be treated. At the outlet 22 of the drum 20, the mixture/sludge typically has a water content of about 85%. Accordingly, the sludge is in a substantially fluid state, and further dewatering is required to convert the sludge in a formable state where it can be shoveled.

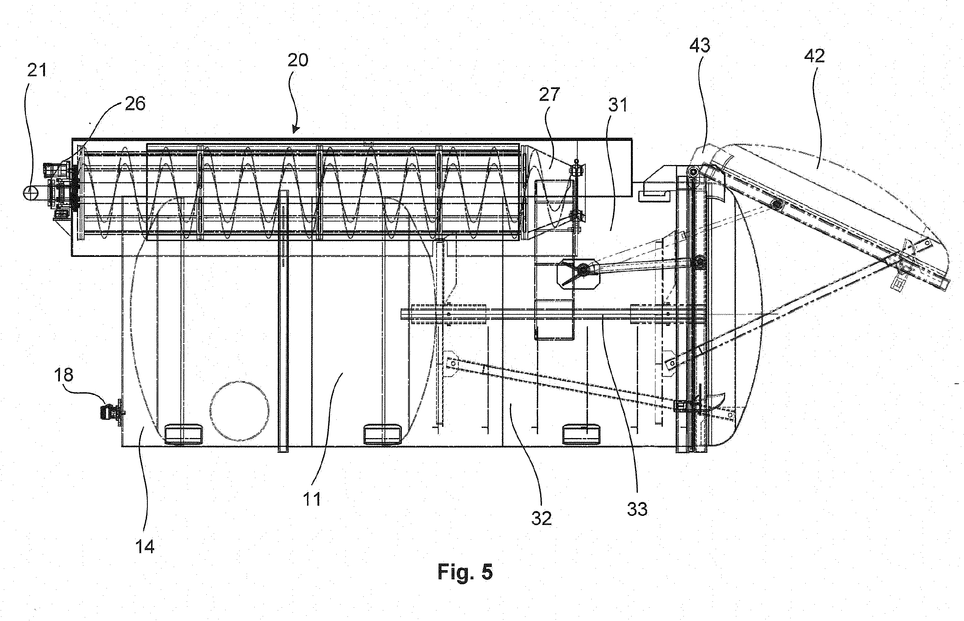

The sludge is ejected through the outlet 22 of the drum 20 and further to a dry solids tank 31 provided with a sieve plate (see 33 in Fig. 5) and a strainer chamber 32 to allow further straining of water from the sludge. The additives are still active and further flocculation and water drainage from the dry solids tank 31 will occur. For example, a water content of about 80% or a dry solids content of about 20% can be expected after about one hour retention time in the dry solids tank 31. The sludge now has a formable consistency and is no longer fluid.

Flushing water and water separated from the sludge within the drum 20 is collected in a chute 28 or similar, and is guided back to the septic tank 12 via duct 19b by means of a reject pump 17 together with water from the strainer chamber 32 of the dry solids tank 31.

The sludge treated in the device according to the invention will hence be more suitable for composting in the cases where the dry solid is delivered at a soil conditioning plant. Alternatively, the dry solids can be deposited at a dump or sent to a gas power plant.

The reject water being pumped back to the septic tank 12 by reject pump 17 has a low content of particles. Experiments have shown that septic sludge treated in the device according to the invention had a content of suspended particles of about 350 mg/l versus 1000 mg/l which is the requirement in municipal purification plants. This is a desired effect when disposing reject water in case the septic tank being emptied is overfilled and reject water must be disposed of outside the tank and down into sand filter.

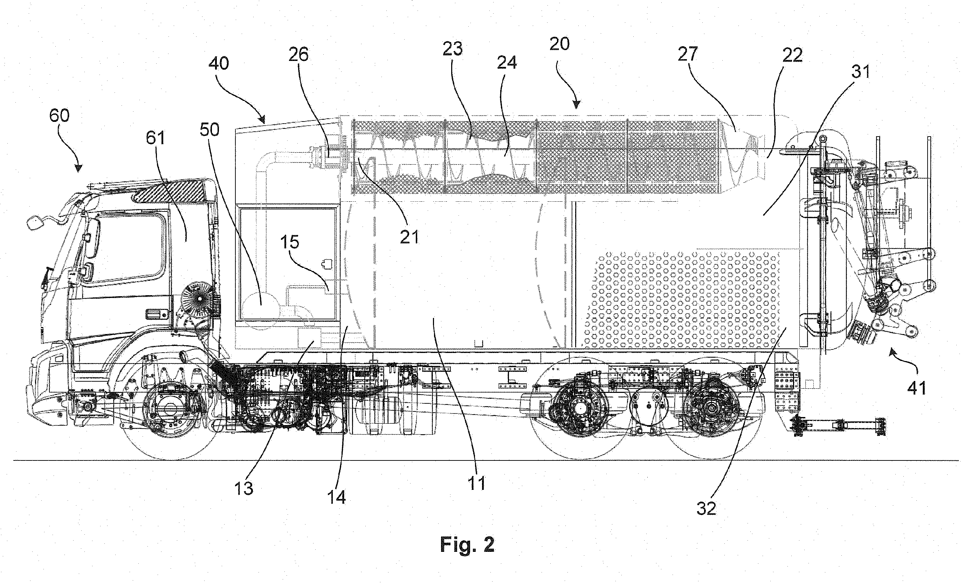

Fig. 2 shows the mobile system according to the invention assembled on a truck 60, viewed from the side and in partial cross-section. The components of the system are assembled in a housing 40. Here the maturation tank 50 is mounted within the housing 40 adjacent to the truck cabin 61. The drum 20 is arranged with its longitudinal axis in alignment with the longitudinal axis of the truck. A closing device is arranged indicated generally at 41 at the end of the cabin 40, for disposal of dry solids from treated sludge and maintenance of the components in the cabin. In the compartment between the closing device 41 at the rear of the cabin 40, the cabin 40 accommodates the dry solids tank 31. The vacuum tank 11 is arranged ahead of the dry solids tank 40. Moreover, the coagulation agent tank 14 is arranged ahead of the vacuum tank 11. The maturation tank 50, the pumps 13 and 15 including drive means 26 for the drum 20 are arranged in the compartment between the truck cabin 61 and the flocculation agent tank 14.

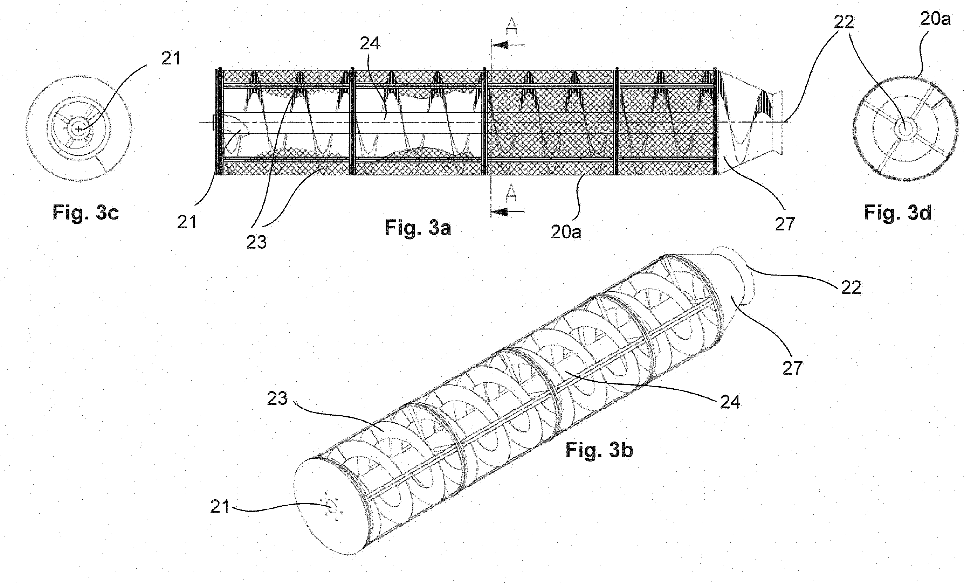

Figs. 3a-d show the drum 20 from different views. Fig. 3a shows a cross-section along the longitudinal axis of the drum 20 and shows the screw feeder 23 arranged about an axle 24. The drum has a perforated surface 20a illustrated by a grid in the drawing. The surface 20a typically has a perforation degree of 50-70%, typically 56%. Fig. 3b shows the drum 20 in perspective from the inlet side 21. Figs. 3c and 3d show end views where Fig. 3c shows an end view of the inlet 21, whereas Fig. 3d shows an end view of the outlet 22. As can be seen from Figs. 3a and 3b, the outlet end of the drum exhibits a cone-shaped transition 27 with a gradually decreasing diameter towards the outlet 22 of the drum 20. This design of the outlet produces a counter-pressure towards sludge being guided through the screw and provides an increased straining effect of water. A video camera (not illustrated) is advantageously mounted within the rotary drum and is connected with a display available to an operator. This enables the operator to observe the sludge consistency inside the rotary drum and optionally controlling the mass ratio between sludge and flocculation agent.

Fig. 4a shows the mixing tank or maturation tank 50 in a partial section from the rear. In this embodiment the tank is an elongate closed cylinder 54 with a sludge inlet 51, a sludge outlet 52 and optionally a water outlet 53 connected to a return duct 16 (not illustrated). The outlet 52 preferably has a smaller flow cross-section than the inlet 51 to create a counter-pressure in the sludge. A sieve 55 is preferably arranged at the sludge outlet 52, here the sieve is provided in the form of a perforated cylinder arranged concentrically with the closed cylinder 54. The transition between the sieve 55 and the closed cylinder upstream is illustrated as a conical transition 56. The sieve 55 in the maturation tank 50 has a relatively low perforation degree compared to the drum 20, e.g. 15-25%, particularly 19%. The sieve 55 has a smaller circumference than the closed cylinder 54 accommodating the sieve 55. The maturation tank 50 is illustrated in a laying position in Fig. 2. In order to obtain best straining effect of water in maturation tank 50, the maturation 50 is best arranged in an upright position, but because of available space it will in many cases be suitable to mount the maturation tank 50 in a laying position. The maturation tank will serve its purpose in both embodiments.

Fig. 5 shows a simplified cross-section through a part of the device according to the invention comprising the different tanks including the drum 20. Viewed from left hand side of the drawing, we can see the tank 14 for flocculation agent with an outlet fitting 18 for duct to pump 13 (not shown). Further (in rear direction) the vacuum tank 11 is arranged adjacent to dry solids tank 31 and the strainer chamber 32. A sieve plate 33 is arranged in the compartment between the dry solids tank 31 and the strainer chamber 32 and serves to keep the sludge in the dry solids tank 31 but allow draining of rest water in the sludge down in the strainer chamber 32. The sieve plate 33 typically exhibits a perforation degree of 15-25%, particularly 23%. The closing device 41 (Fig. 2) exhibits a lid 42 with seals (not shown) and is her illustrated supported pivotal in a hinge means 43.

### Advantages

The invention has several advantages. The device can be produced in a very compact manner and assembled at the rear end of a truck. The use of maturation tank to contact sludge and flocculation agent for a period of time prior to straining in the drum, results in reduced consumption of flocculation agent. Moreover, dry solid is obtained with a sufficiently low water content to be formed, about 80% water or less, and the reject water has a very low particle content. The device provides about double capacity for mobile sludge removal systems compared to prior art. A particular advantage of the invention is that dewatering occurs at the site of draining, whereupon the reject water is directed back to the septic tank being drained. In this way, the weight to be transported is substantially lower, and a higher number of locations can be served per tour accompanied by fuel savings. Another advantage is that spreading of different bacterial flora between different septic tanks is prevented.

### Modifications

The description above shows an exemplary embodiment of the device according to the invention, and a person skilled in the art with support in the present description and his/hers professional knowledge will be able to construct alternative embodiments with the same or substantially the same effect without deviating from the basic idea and scope of protection. Alternatively, the screw 23 can rotate inside the drum 20. Moreover, the sieve 55 in the maturation tank 50 can have cross-section different from cylindrical. The same applies to the closed cylinder part 54 of the maturation tank 50: the cylinder part 54 can for example be square or rectangular, dependent on the prevailing needs in constructing a most possible compact system. Moreover, the water solution with flocculation agent can be supplied directly to maturation tank 50 from flocculation agent tank 14.

## Claims

1. A device for dewatering sludge from containers, in particular sludge from stationary septic tanks (12), said device being arranged on a vehicle and comprising:
a vacuum tank (11) connected with at least one vacuum pump (10), a suction duct (19a), arranged to evacuate fluid sludge from a container (12) to the vacuum tank (11), a return duct (19b) to return reject water back to the container,
a flocculation agent container (14) for supply of flocculation agent to the fluid sludge,
at least one sieve device for separating water from the sludge,
a dry solids container (31) for accommodation of partially dewatered sludge, and
means (17, 19b) for returning reject water separated from the sludge back to the container (12),
**characterized in that** the device comprises:
a maturation tank (50) with an inlet (51) and an outlet (52), to receive fluid sludge from the vacuum tank (11) via pump (13) mixed with flocculation agent from container (14) in duct (19c), or to receive fluid sludge from vacuum tank (11) via pump (13) and ducts (19c, 19d) and flocculation agent from tank (14) via pump (15) and duct (19e),
wherein the outlet (52) of the maturation (50) tank is connected to a rotary filter drum (20) having an inlet (21) and an outlet (22), a perforated surface (20a) and a screw (23) arranged within the drum (20),
flushing means (25) arranged to flush the outside of the drum surface (20a) with water;
collecting means (28) for collecting flushing water and return to the septic tank (12), and
a dry solids tank (31) in flow connection with the outlet (22) of the filter drum (20), wherein the dry solids tank in further exhibits a sieve plate (33) and a strainer chamber (32) arranged under the dry solids tank (31) for further draining water from the sludge.

2. The device according to claim 1, wherein the maturation tank (50) exhibits a sieve means (55) connected to an outlet (53), and a return duct (16) for draining of water from the mixture of sludge and flocculation agent.

3. The device of claim 2, wherein the sieve means comprises a concentric perforated cylinder (55) arranged within a closed cylinder (54) at the outlet end (52) of the maturation tank (50).

4. The device of claim 1, wherein the outlet end of the drum (20) exhibits a cone-shaped transition (27) having a gradually decreasing diameter towards the outlet (22).

5. The device of claim 1, wherein a water tank (30) is arranged to supply flocculation agent to the flocculation agent tank (14).

6. The device of claim 1 or 5, wherein the flocculation agent tank (14) is connected to the suction side of the pump (13), arranged to pump sludge from the vacuum tank (11).

7. The device of claim 1, wherein the flushing means (25) is a row of nozzles arranged along at least a part of the underside of the drum (20).

8. The device of claim 1, wherein the rotary drum (20) exhibits a motor (26) to rotate the drum (20) together with the screw (23).

9. The device of claim 2, wherein the sieve means (55) exhibits a perforation degree of 15-25%, particularly 19%.

10. The device of claim 1, wherein the sieve plate (33) in the dry solids tank (31) exhibits a perforation degree of 15-25%, particularly 23%.

11. The device of claim 1, wherein the drum surface (20a) exhibits perforation degree of 50-70%, particularly 56%.

12. The device of any one of claims 1, 4, 7, 8 or 11, wherein a video camera is located within the rotary drum, connected with a display, arranged to show the consistency of mass accommodated inside the rotary drum above to an operator.

13. A method for emptying a container (12), wherein sludge is evacuated from the septic tank (12) to a vacuum container (11) and mixed with flocculation agent from a flocculation agent tank (14), whereupon the mixture of sludge and flocculation agent is supplied to sieve means for removing water from the sludge, **characterized in that** the mixture of sludge and flocculation agent is guided to a maturation tank (50) to initiate flocculation of the sludge, whereupon the mature mixture of sludge and flocculation agent is supplied to a rotary drum (20) and guided along a perforated surface (20a) by an internal screw (23), and flushed at least periodically with water from the outside of the drum (20), whereupon the mixture of sludge and flocculation agent is guided out of the drum and further to a dry solids tank (31) and subjected to additional straining to obtain dry solids with a further reduced water content, whereby flushing water and water removed from the sludge is returned to the container (12) as reject water with a low particle content.

14. The method of claim 13, wherein the mixture of sludge and flocculation agent is guided through a sieve (55) in the maturation tank (50) to perform an initial straining of water.

15. The method of claim 13, wherein an operator, by means of a video camera arranged within the rotary drum and a connected display, observes the consistency of the sludge inside the rotary drum to observe the consistency of the sludge and optionally adjust the mass ratio between sludge and flocculation agent.
